(19) Europäisches Patentamt
European Patent Office
Office européen des brevets

(11) **EP 2 275 671 A1**

(12) **EUROPEAN PATENT APPLICATION**

(43) Date of publication:
**19.01.2011 Bulletin 2011/03**

(51) Int Cl.:
*F03D 1/06* (2006.01)     *F03D 11/00* (2006.01)

(21) Application number: **09161960.1**

(22) Date of filing: **04.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicants:
• **Technical University of Denmark
2800 Kgs. Lyngby (DK)**
• **Chongqing University
Chongqing 400030 (CN)**

(72) Inventors:
• **Dong Wang, Xu
400030 Chongqing University, Chongqing (CN)**

• **Zhong Shen, Wen
2820 Gentofte (DK)**
• **Chen, Jin
400030 Chongqing University, Chongqing (CN)**
• **Jun Zhu, Wei
2800 Lyngby (DK)**
• **Nørkær Sørensen, Jens
2700 Brønshøj (DK)**

(74) Representative: **Hansen, Lene et al
Høiberg A/S
St. Kongensgade 59 A
1264 Copenhagen K (DK)**

(54) **System and method for designing airfoils**

(57) The present invention relates to a system and a method for designing an airfoil by means of an analytical airfoil profile, said method comprising the step of applying a conformal mapping to a near circle in a near circle plane, wherein the near circle is at least partly expressed by means of an analytical function, said conformal mapping transforming the near circle in the near circle plane to the airfoil profile in an airfoil plane. The invention further relates to design optimization of airfoils, in particular airfoils of rotor blades for wind turbines. The invention further relates to specific airfoil profiles.

Fig. 1D

EP 2 275 671 A1

## Description

The present invention relates to design and design optimization of airfoils, in particular airfoils of rotor blades for wind turbines.

## Background of invention

Airfoil design is a very basic and important task for the design of e.g. a wind turbine system. It is essential to provide efficient engineering design of large wind turbines to optimize the energy yield from the wind and to reduce structural loads. Both are influenced by the aerodynamic design. A key element in the aerodynamic design is the use of special tailored airfoils to increase the ratio of energy yield to loading and thereby to reduce the cost of energy.

The target design characteristics for airfoils have been refined during the years and tailored to the specific type of power control and to the need for off-design operation. The desirable airfoil characteristics can be divided into structural and aerodynamic properties and the wind turbine blade can be divided into root, mid and tip parts where the root part is determined mainly from structural considerations. In contrast, the tip part is determined from aerodynamic considerations. Special considerations for wind turbine airfoils include the need for off-design operation and insensitivity to leading edge roughness to yield robust and reliable characteristics in all terrain conditions.

In the past years of wind turbine development, a few series of airfoils have been designed for wind turbines. For example, NREL airfoils from National Renewable Energy Laboratory, DU airfoils from Delft University, RISØ airfoils from RISØ National Laboratory and FFA airfoils from the Aeronautical Research Institute of Sweden. Most of these wind turbine airfoils have been designed using traditional inverse methods where the airfoil surface flow is prescribed at specified operational conditions and a shape is found that will generate these surface conditions.

## Summary of invention

Any airfoil profile can be expressed with a conformal mapping and an analytical function of a finite series of Fourier expansions [7], [8]. However, the Fourier expansions complicate the design and optimization procedure of the airfoil profile. An object of the invention is therefore to provide a simple and purely analytical expression for general airfoil profiles.

A usual airfoil design and optimization method [12] is provided by combining numerical optimization with the flow solver XFOIL. The airfoil shape is numerically optimized by means of various design variables that describe the airfoil shape. However, this design method is computationally demanding. Thus, a further object of the invention is a faster airfoil design optimization method.

When the airfoil shape is determined by using e.g. splines to describe the shape the smoothness of the airfoil surface is limited. A further object of the invention is therefore to provide an airfoil with a smooth surface, preferably an endlessly smooth surface.

This is achieved by a method for designing an airfoil by means of an analytical airfoil profile, said method comprising the step of applying a conformal mapping to a near circle in a near circle plane, wherein the near circle is at least partly expressed by means of an analytical function, said conformal mapping transforming the near circle in the near circle plane to the airfoil profile in an airfoil plane.

The invention further relates to a system for designing an airfoil by means of an analytical airfoil profile, said system comprising means for applying a conformal mapping to a near circle in a near circle plane, wherein the near circle is at least partly expressed by means of an analytical function, said conformal mapping transforming the near circle in the near circle plane to the airfoil profile in an airfoil plane.

The *airfoil* is the shape of a wing, blade or sail as seen in cross-section and the corresponding *airfoil profile* is then the closed curve defining the external shape of said airfoil.

In a further aspect of the invention the near circle is at least partly expressed by means of a Taylor series. In a preferred embodiment of the invention the conformal mapping is a Joukowsky transformation.

In a further aspect of the invention the near circle is at least partly expressed by means of a trigonometric power series, preferably by means of a power series of sine and cosine functions, such as a power series of sine and (1-cos) functions. The near circle plane and/or the airfoil plane are preferably complex planes. In the near circle plane the near circle is preferably expressed by means of polar coordinates $(r, \theta)$, such as $q \exp(\varphi(\theta) + i\theta)$, where $\theta$ is an angular variable, $\varphi(\theta)$ is a function of $\theta$ and $q$ is a numerical constant, preferably $q = c/4$, where c is the chord of the airfoil.

In a preferred embodiment of the invention the conformal mapping maps a near circle $z'$ from the near circle plane to an airfoil profile $z$ in the airfoil plane by means of the relation $z = z' + \dfrac{q^2}{z'}$, where $q$ is a numerical constant,

preferably $q = c/4$, where $c$ is the chord of the airfoil.

Preferably, the complex coordinates of the airfoil profile $z$ are defined as $z = x + iy$, where $x$ is the chord-wise coordinate of the airfoil, $y$ is the coordinate of the airfoil perpendicular to the chord and where $(x, y)$ expressed in polar coordinates becomes $x = (r + q^2 / r)\cos\theta$ and $y = (r - q^2 / r)\sin\theta$ due to the conformal mapping.

In a preferred embodiment of the invention the real part of the near circle is at least partly expressed as

$$\sum_{k=1}^{n} a_k \left(1 - \cos\theta\right)^k + b_k \sin^k \theta$$, where $n$ and $k$ are integers and $a_1, b_1, a_2, b_2 ... a_k, b_k$ are coefficients determining the shape of the airfoil.

Thus, in the near circle plane the near circle is preferably expressed as $q \exp(\varphi(\theta) + i\theta)$, where $\theta$ is an angular variable, $\varphi(\theta) = \sum_{k=1}^{n} a_k \left(1 - \cos\theta\right)^k + b_k \sin^k \theta$ and $q$ is a numerical constant, preferably $q = c/4$, where c is the chord of the airfoil. Preferably $n$ is at least 1, 2, 3, 4, 5, 6, 7, 8, 9, such as at least 10. In a preferred embodiment of the invention n = 3.

Thus, an analytical equation for an airfoil profile can be provided according to one aspect of the invention. By combining this equation with the flow solver XFOIL, the lift and drag of the corresponding airfoil are easier to control.

In a further aspect of the invention the real part of the near circle is at least partly expressed as

$$a_1 (1 - \cos\theta) + b_1 \sin\theta + a_2 (1 - \cos\theta)^2 + b_2 \sin^2 \theta + a_3 (1 - \cos\theta)^3 + b_3 \sin^3 \theta ,$$

where the coefficients $a_1, b_1, a_2, b_2, a_3$ and $b_3$ determine the shape of the airfoil.

By expressing the airfoil profile by means of an analytical function a smooth surface of the airfoil can be provided, because an analytical function is infinitely differentiable. Thus, any part of the airfoil can be expressed in great detail.

A further aspect of the invention relates to a method for optimizing the energy capture of an airfoil designed according to the invention.

This is achieved by a method for optimizing the design of an airfoil, said method comprising the steps of:

   a) providing an analytical expression of the airfoil profile by means of any of the previously listed methods,
   b) simulating / calculating / estimating / determining the aerodynamic performance of the airfoil,
   c) varying the coefficients $a_1, b_1, a_2, b_2 ... a_k, b_k$ in the expression of the airfoil profile, and
   d) maximizing the energy capture of the airfoil by repeating steps b) and c).

In a preferred embodiment of the invention the aerodynamic performance of an airfoil is provided by means of XFOIL. In a further embodiment of the invention a thickness to chord ratio of the airfoil is defined, i.e. the airfoil design is optimized with a predefined thickness to chord ratio. Preferably a constraint is applied on the location of the maximum thickness of the airfoil and a constraint may also be applied to the attack angle $\alpha$ because in practice the aerodynamic performance of the airfoil is only important for a limited interval of attack angles. Preferably the energy capture of the airfoil is maximized by means of maximizing the lift-drag ratio of the airfoil.

Another aspect of the invention relates a rotor blade for a wind turbine, wherein the airfoil of the rotor blade is at least partly designed according to any of the methods listed above.

Further aspects of the invention relates to wings, such as airplane wings, sails, such as a sail for a sailboat, blades, such as propeller blades, wherein the airfoil of the wing, sail and/or propeller is at least partly designed according to any of the methods listed above.

The invention furthermore relates to a system comprising means for carrying out any of the above listed methods.

The invention furthermore includes a computer program product having a computer readable medium, said computer program product comprising means for carrying out any of the listed methods.

## Background

The Joukowsky transform, named after the Russian scientist Nikolai Egorovich Joukowsky, is a conformal map historically used to understand some principles of airfoil design. The transform is

$$z = z' + \frac{1}{z'}$$

where $z = x + iy$ is a complex variable in the new space and $z' = x' + iy'$ is a complex variable in the original space. This transform is also called the Joukowsky transformation, the Joukowski transform, the Zhukovsky transform and other variations.

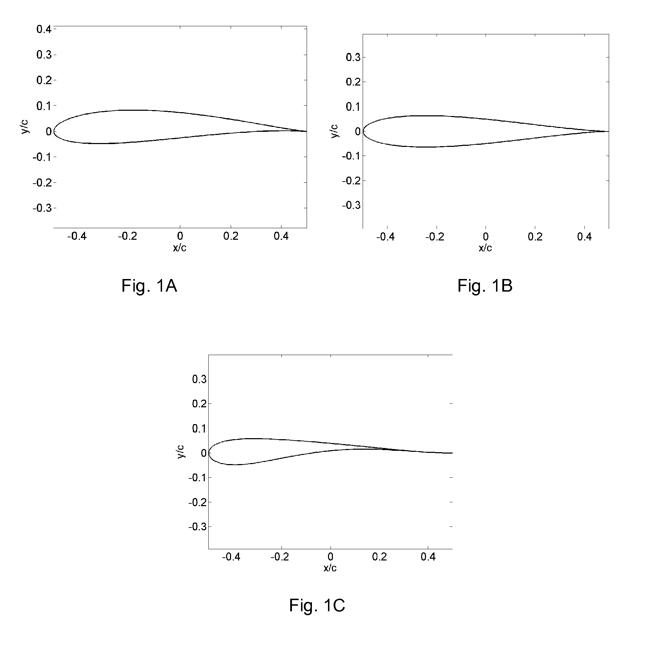

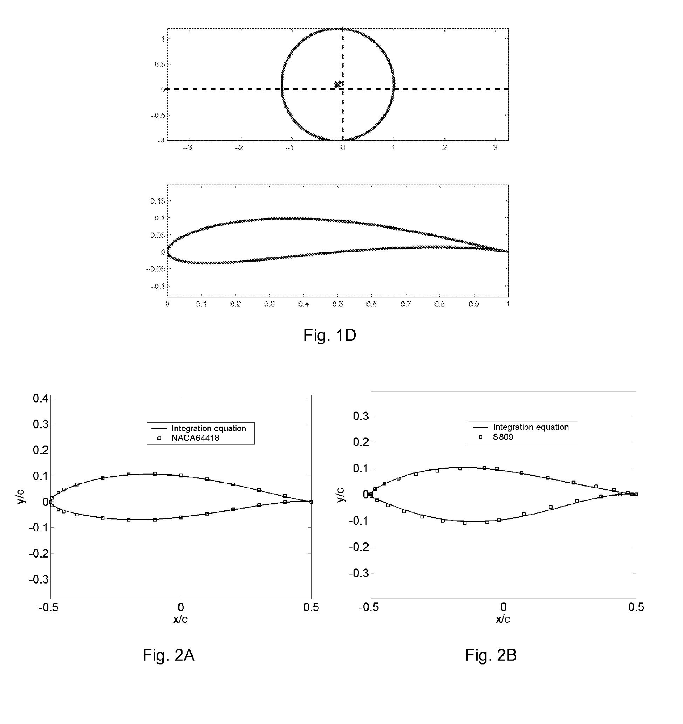

In aerodynamics, the transform can be used to solve for the two-dimensional potential flow around a class of airfoils known as Joukowsky airfoils. A Joukowsky airfoil is generated in the z plane by applying the Joukowsky transform to a circle in the z' plane. This is illustrated in fig. 1D. The coordinates of the centre of the circle are variables, and varying them modifies the shape of the resulting airfoil. The circle encloses the origin (where the conformal map has a singularity) and intersects the point $z = 1$. This can be achieved for any allowable centre position by varying the radius of the circle. If the streamlines for a flow around the circle are known, then their images under the conformal mapping will be streamlines for a flow around the Joukowski airfoil.

Thus, in general any airfoil profile can be mapped to a near circle by the relation

$$z = z' + \frac{q^2}{z'} \qquad (1)$$

where $q = c/4$, where c is the chord of the airfoil, $z$ is the complex variable in the airfoil plane, and $z'$ the one in the near circle plane. The coordinates of $z$ is defined as

$$z = x + yi \qquad (2)$$

Using the polar coordinates $(r,\theta)$ in the near circle plane, the coordinates of the airfoil can be expressed as

$$\begin{cases} x = (r + q^2/r)\cos\theta \\ y = (r - q^2/r)\sin\theta \end{cases} \qquad (3)$$

On the other hand, the coordinates of $z'$ in the near circle plane is used as

$$z' = q\exp(\varphi + i\theta) \qquad (4)$$

where the real part of the exponential argument $\varphi$ is a function of $\theta$ as $\varphi = \varphi(\theta)$. The function $\varphi(\theta)$ is expressed in a series of sine and cosine functions as

$$\varphi(\theta) = a_1(1 - \cos\theta) + b_1\sin\theta + a_2(1 - \cos\theta)^2 + b_2\sin^2\theta + \ldots + a_k(1 - \cos\theta)^k + b_k\sin^k\theta + \ldots \qquad (5)$$

where $k = 1,2,3,\ldots n$ and $a_1, b_1, a_2, b_2 \ldots a_k, b_k$ are the unknown coefficients which determine the airfoil shape. From equation (5), it is noticed that $\varphi(0) = 0$. This ensures a sharp trailing edge which is a common characteristic of airfoils. Equation (5) will in the following be referred to as the integrated expression.

**Generality and characteristics of the analytical equation**

Combining equations (2) and (4), $\psi$ and $\theta$ can be expressed in terms of $x$ and $y$ as

$$\cosh\psi = \frac{x}{2q\cos\theta}, \; \sinh\psi = \frac{y}{2q\sin\theta} \; \text{and} \; 2\sin^2\theta = p + \sqrt{p^2 + \left(\frac{y}{q}\right)^2} \qquad (6)$$

where $p = 1 - \left(\dfrac{x}{2q}\right)^2 - \left(\dfrac{y}{2q}\right)^2$. If the coordinates $x$ and $y$ of an existing airfoil are known, the coefficients of equation (5) are given from equation (6).

If $n$ points are known on an airfoil surface, the airfoil shape can in principle be determined with the first $n$ coefficients of equation (5). When the number of coefficients is large, the computing time will be long. This is not very convenient for optimizations. Thus, there is a trade off between using a small number of coefficients in the integrated expression and representing airfoil shapes with a sufficient accuracy. In one embodiment of the invention only the first six coefficients of equation (5) are used, thus

$$\varphi(\theta) = a_1(1-\cos\theta) + b_1\sin\theta + a_2(1-\cos\theta)^2 + b_2\sin^2\theta + a_3(1-\cos\theta)^3 + b_3\sin^3\theta \quad (7)$$

To analyse the characteristics of an airfoil profile provided by means of equation (7), three special cases will be illustrated. These cases correspond to three types of airfoils. For convenience, the airfoil coordinates are normalized by the airfoil chord $c$.

Case 1: Letting the first two coefficients be $a_1 = 0.1$ and $b_1 = 0.05$, putting all other coefficients equal to 0, the function $\varphi(\theta)$ becomes

$$\varphi(\theta) = 0.1 \times (1-\cos\theta) + 0.05 \times \sin\theta \qquad (8)$$

From equations (1), (4) and (8), an airfoil shape is obtained as shown in Figure 1A.

Case 2: Letting the third and forth coefficients be $a_2 = 0.05$ and $b_2 = 0.05$, respectively, setting all other coefficients equal to 0, the function $\varphi(\theta)$ becomes

$$\varphi(\theta) = 0.05 \times (1-\cos\theta)^2 + 0.05 \times \sin^2\theta \qquad (9)$$

From equation (1), (4) and (9), a second airfoil shape is obtained as shown in Figure 1B.

Case 3: Letting the fifth and sixth coefficients be $a_3 = 0.03$, $b_3 = 0.05$, respectively, setting all other coefficients equal to 0, the function $\varphi(\theta)$ becomes

$$\varphi(\theta) = 0.03 \times (1-\cos\theta)^3 + 0.05 \times \sin^3\theta \qquad (10)$$

From equation (1), (4) and (10), the shape of this airfoil shape is obtained as shown in Figure C.

From Figures 1A-1C it is seen that the three shapes obtained by means of the present invention have the basic characteristics of an airfoil.

If $n$ points are known on an airfoil surface, the airfoil shape can in principle be determined with the first $n$ coefficients of equation (5). To illustrate this two popular airfoils, NACA64418 and S809, are expressed using the present integrated expression. Using the profile data of the NACA64418 or the S809 airfoils, six key data points are chosen that approximately determines the shape of the airfoil. Inserting the coordinates (x, y) of these six points into equation (6), the values of $\varphi$ can be determined. The six coefficients $[a_1, b_1, a_2, b_2, a_3, b_3]$ are obtained as shown in table 1. In order to analyse the quality of the airfoil derived from the reduced expression, the NACA64418 and S809 airfoils are reproduced using equations (1), (2), (4) and (7). Figures 2A and 2B show the reproduced and the original NACA64418 and S809 airfoils. From the figures, it is seen that the integrated expression can express the two airfoils with good accuracy. It is worth noting that a different choice of the six key data points results in six different coefficients and a different airfoil shape. If a higher accuracy is required, more coefficients are needed. In conclusion: A general airfoil can be represented by the introduced integrated expression using a relatively limited number of coefficients.

Table 1

| Airfoils | $a_1$ | $b_1$ | $a_2$ | $b_2$ | $a_3$ | $b_3$ |
|----------|-------|-------|-------|-------|-------|-------|
| NACA64418 | 0.89482 | 0.04960 | -0.35665 | -0.35445 | -0.02444 | -0.01001 |
| S809 | 1.47486 | 0.04733 | -0.55641 | -0.65773 | -0.07436 | -0.05212 |

**Design optimization**

In a preferred embodiment of the invention six coefficients are chosen as design variables to represent the shape of the airfoil. The lift and drag coefficients, which are the main design objectives when optimizing the airfoil design, are calculated using the fast and robust XFOIL code by Drela [9].

An important element during the airfoil design optimization procedure is the criteria for a high lift and a low drag which can increase the energy capture and reduce the cost of energy. In most cases, it is desirable to obtain a high lift and drag ratio in the design range. Therefore, one design objective is the maximum ratio of lift and drag coefficients:

$$f = \max(c_l / c_d) \qquad (11)$$

In order to simplify the optimization procedure the lift-drag ratio $c_l/c_d$ may be maximized only for an interval of attack angle $\alpha$, such as for $\alpha$ between 0 and 45°, such as between 0° and 30°, such as between 0° and 20°, such as between 0° and 10°, such as between 1° and 10°, such as between 2° and 10°.

It is known that high roughness on an airfoil can cause earlier transition to turbulent flow. It is therefore essential to keep the airfoil shape smooth in the design optimization. The airfoil shape can be expressed analytically using the trigonometric expression and an analytical expression results in a smooth airfoil shape. In known optimization procedures for airfoils, the design variables are chosen to be a spline that can control the shape of an airfoil. However, according to the present invention the coefficients of the shape expression $a_1,b_1,a_2,b_2...a_k,b_k$ are chosen to be the design variables.

In a preferred embodiment of the invention it is ensured that the designed airfoil shape defines the basic characteristics of an airfoil by means of applying some constraints, such as

$$X_{min} \leq X \leq X_{max} \qquad (12)$$

Since the analytical expression can express airfoil shapes with the first six coefficients and the optimization with a small number of design variables can run fast, only the first six coefficients are used to design airfoils in one embodiment of the invention. Thus, only the following coefficients are active

$$X = [a_1, b_1, a_2, b_2, a_3, b_3] \qquad (13)$$

In order to design airfoils, the basic structural features of the airfoil shape needs to be satisfied. The airfoil thickness-to-chord ratio is one of the most important parameters in determining the basic structure of the airfoil. The location of the maximum thickness of the airfoil is also important. In one embodiment of the invention the location of the maximum thickness restricted to be located between 20% and 40% of the airfoil chord, measured from the leading edge [13]. The constraint of the location of the maximum thickness may therefore be applied as

$$0.2 \leq x/c \leq 0.4 \qquad (14)$$

Further aspects of the invention relates to particular airfoils modelled, designed, optimized and/or manufactured according to the invention. The following three airfoils were designed and optimized by varying the first six coefficients $a_1$, $b_1$, $a_2$, $b_2$, $a_3$, $b_3$ and setting all other coefficients to 0.

Thus, one aspect of the invention relates to an airfoil profile wherein

$a_1 = 0.0815$, such as $a_1$ is between 0.0814 and 0.0816, such as between 0.0812 and 0.0818, such as between 0.08 and 0.083,

$b_1 = 0.1$, such as $b_1$ is between 0.098 and 0.102, such as between 0.096 and 0.104, such as between 0.09 and 0.11,

$a_2 = 0.0002$, such as $a_2$ is between 0.00018 and 0.00022, such as between 0.00016 and 0.00024, such as between 0.0001 and 0.0003,

$b_2 = 0.0275$, such as $b_2$ is between 0.0273 and 0.0277, such as between 0.00271 and 0.0279, such as between 0.025 and 0.03,

$a_3 = 0.0089$, such as $a_3$ is between 0.0087 and 0.0091, such as between 0.0085 and 0.0093, such as between 0.007 and 0.01, and

$b_3 = 0.0001$, such as $b_3$ is between 0.00008 and 0.00012, such as between 0.00006 and 0.00014, such as between 0 and 0.0003.

A particular example of this airfoil profile will in the following be referred to as CQU-DTU-A15.

Another aspect of the invention relates to an airfoil profile wherein

$a_1 = 0.134$, such as $a_1$ is between 0.132 and 0.136, such as between 0.13 and 0.138, such as between 0.1 and 0.17,

$b_1 = 0.1046$, such as $b_1$ is between 0.103 and 0.106, such as between 0.1 and 0.11, such as between 0.08 and 0.13,

$a_2 = 0$, such as $a_2$ is between 0 and 0.000001, such as between 0 and 0.00001, such as between 0 and 0.001.

$b_2 = 0$, such as $b_2$ is between 0 and 0.000001, such as between 0 and 0.00001, such as between 0 and 0.001.

$a_3 = 0.0019$, such as $a_3$ is between 0.0017 and 0.0021, such as between 0.0015 and 0.0023, such as between 0.001 and 0.004, and

$b_3 = 0.0269$, such as $b_3$ is between 0.0267 and 0.0271, such as between 0.0265 and 0.0273, such as between 0.02 and 0.033.

A particular example of this airfoil profile will in the following be referred to as CQU-DTU-A18.

Yet another aspect of the invention relates to an airfoil profile wherein

$a_1 = 0.05$, such as $a_1$ is between 0.048 and 0.052, such as between 0.046 and 0.054, such as between 0.04 and 0.06,

$b_1 = 0.1324$, such as $b_1$ is between 0.131 and 0.134, such as between 0.128 and 0.137, such as between 0.1 and 0.17,

$a_2 = 0.0503$, such as $a_2$ is between 0.049 and 0.051, such as between 0.047 and 0.053, such as between 0.04 and 0.06,

$b_2 = 0.048$, such as $b_2$ is between 0.046 and 0.05, such as between 0.043 and 0.0053, such as between 0.04 and 0.06,

$a_3 = 0.0064$, such as $a_3$ is between 0.0062 and 0.0066, such as between 0.006 and 0.007, such as between 0.001 and 0.012,

$b_3 = 0.0001$ such as $a_3$ is between 0.00008 and 0.00012, such as between 0.00006 and 0.00014, such as between 0 and 0.001.

A particular example of this airfoil profile will in the following be referred to as CQU-DTU-A21.

### Definitions and abbreviations

**An airfoil** (or **aerofoil**) is the shape of a wing or blade (of a propeller, rotor or turbine) or sail as seen in cross-section.

An **airfoil profile** is the closed curve defining the external shape of the airfoil.

**The mean camber line** is a line drawn midway between the upper and lower surfaces of an airfoil.

**The chord line** or **airfoil chord** is a straight line connecting the leading and trailing edges of the airfoil at the ends of the mean camber line.

**The chord** is the length of the chord line and is the characteristic dimension of an airfoil profile.

The maximum thickness and the location of maximum thickness are expressed as a percentage of the chord.

For symmetrical airfoils both **mean camber line** and **chord line** pass from centre of gravity of the airfoil and they touch at the leading and trailing edges of the airfoil.

**The aerodynamic centre** is the point about which the pitching moment is independent of the lift coefficient.

**The centre of pressure** is the chord wise location about which the pitching moment is zero.

| | |
|---|---|
| c | airfoil chord |
| $c_l$ | lift force coefficient |
| $c_d$ | drag force coefficient |
| $c_l/c_d$ | lift-drag coefficient ratio |
| Re | Reynolds number |
| t | airfoil thickness |

*tlc*    thickness-to-chord ratio
*x*     airfoil chordwise coordinate
*y*     airfoil coordinate perpendicular to chord
α     angle of attack

**Description of Drawings**

The invention will now be described in greater detail with reference to the figures, in which

Fig. 1A        shows an example of an airfoil profile where $a_1 = 0.1$ and $b_1 = 0.05$ and all other coefficients are 0,
Fig. 1B        shows an example of an airfoil profile where $a_2 = 0.05$ and $b_2 = 0.05$ and all other coefficients are 0,
Fig. 1C        shows an example of an airfoil profile where $a_3 = 0.03$ and $b_3 = 0.05$ and all other coefficients are 0,
Fig. 1D        show the near circle in the near circle plane (top) and the corresponding airfoil in the airfoil plane (below) after the Joukowski transformation,
Fig. 2A        shows the NACA64418 airfoil expressed using a method according to the invention,
Fig. 2B        shows the S809 airfoil expressed using a method according to the invention,
Figs. 3A-3H    illustrate the airfoil shape, the corresponding near circle and the aerodynamic performance of the airfoil CQU-DTU-A15 designed according to one embodiment of the invention,
Figs. 4A-4K    illustrate the airfoil shape, the corresponding near circle and the aerodynamic performance of the airfoil CQU-DTU-A18 designed according to one embodiment of the invention, and
Figs. 5A-5M    illustrate the airfoil shape, the corresponding near circle and the aerodynamic performance of the airfoil CQU-DTU-A21 designed according to one embodiment of the invention.

**Examples**

Three new airfoils CQU-DTU-A15, CQU-DTU-A18 and CQU-DTU-A21 with a thickness of approximately 15%, 18% and 21%, respectively, have been designed according to the present invention using the six coefficients $a_1, b_1, a_2, b_2, a_3$ and $b_3$ to describe the shape of the airfoil. The coefficients for CQU-DTU-A15, CQU-DTU-A18 and CQU-DTU-A21 can be found in table 2.

Table 2

| Airfoils | $a_1$ | $b_1$ | $a_2$ | $b_2$ | $a_3$ | $b_3$ |
|---|---|---|---|---|---|---|
| CQU-DTU-A15 | 0.0815 | 0.1000 | 0.0002 | 0.0275 | 0.0089 | 0.0001 |
| CQU-DTU-A18 | 0.1340 | 0.1046 | 0.0000 | 0.0000 | 0.0019 | 0.0269 |
| CQU-DTU-A21 | 0.0500 | 0.1324 | 0.0503 | 0.0480 | 0.0064 | 0.0001 |

*Characteristics*

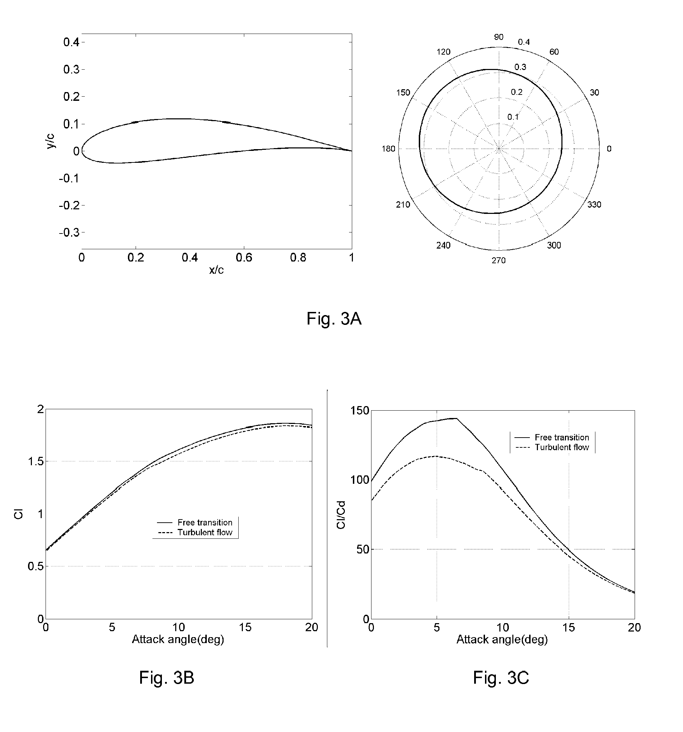

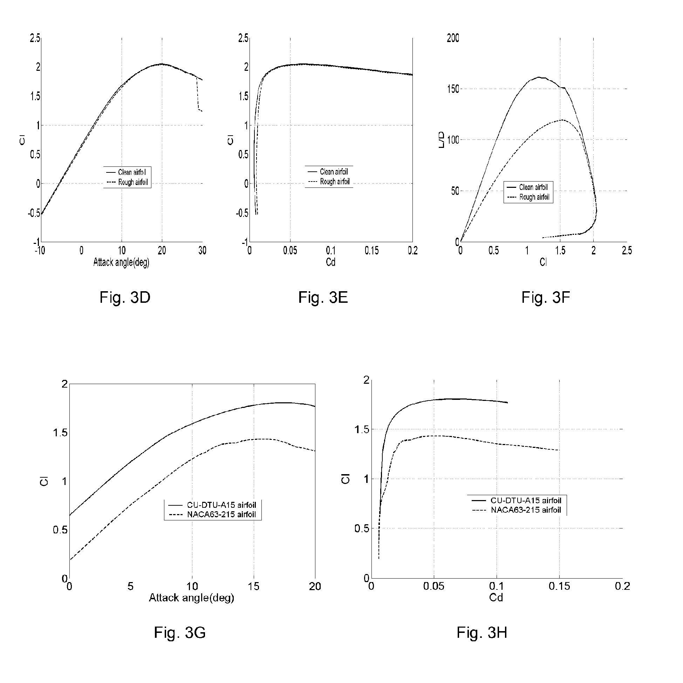

The three new airfoils are designed to have a high lift-drag ratio $c_l/c_d$ for an attack angle $\alpha \in [2°, 10°]$. Airfoils with thickness-chord ratios of 0.15, 0.18 and 0.21 are used for constructing the outboard part of a wind turbine blade, which plays an important role for the output power of a wind turbine. Table 3 lists the characteristics of the three airfoil profiles and figures 3-5 illustrates the shape, the corresponding near circle and the aerodynamic performance of the three new airfoils. All aerodynamic performance results shown here are carried out using the viscous-inviscid interactive XFOIL code.

Table 3

| Designed airfoil | | | | |
|---|---|---|---|---|
| $t/c$ | $x/c$ at max $t/c$ | Re$\times 10^6$ | Max $c_l$ | max $(c_l/c_d)$ |
| 0.15 | 0.25 | 1.6 | 1.86 | 143.92 |
| 0.18 | 0.25 | 1.6 | 1.87 | 150.09 |
| 0.21 | 0.23 | 1.6 | 1.96 | 130.10 |

*Roughness*

Roughness in the region near the airfoil leading edge is formed by accumulation of dust, dirt and bugs which can lead to premature transition in the laminar boundary layer and result in earlier separation. To simulate the influence of roughness on the performance of an airfoil, the fixed-transition on the upper and lower surfaces is usually used. In the RISØ experiments [19], transition was fixed at 5% and 10% on the upper and lower surfaces, respectively. In order to test the sensitivity of the designed airfoils according to the present invention, transition was fixed at the same locations: 5% and 10% on the upper and lower surfaces, respectively. The lift and drag coefficients of the new three airfoils were calculated using the XFOIL code. Computations for both free transitional and fully turbulent flows have been carried out.

*Comparisons*

In order to demonstrate the performance of the designed airfoils, comparisons between the new airfoils and some existing wind turbine airfoils such as RISØ, DU, NACA and FFA airfoils are provided. The aerodynamic performance of the designed airfoils is calculated with the XFOIL code. A database of force characteristics on the existing airfoils is provided by Bertagnolio et al. [11]. The demonstration shows that the airfoils designed according to the invention can improve the efficiency of wind turbines. For a wind turbine operated at a tip-speed-ratio (rotating speed at the tip / wind speed) of 6, the power coefficient estimated from the airfoils at a radius of about 66.7% on the blade is 0.55 for a standard airfoil with $C_l/C_d$ = 100 and 0.565 for one of the new airfoils with $C_l/C_d$ around 160 (illustrated in the examples below). Thus, the increase in power coefficient is about (0.565-0.55)/0.55=2.5%. This correlates with the expected increase in energy production from wind turbines with airfoils designed and optimized according to the invention.

**CQU-DTU-A15**

Figure 3A shows the shape of the CQU-DTU-A15 airfoil with a thickness-chord ratio of 0.15. The shape of the airfoil is illustrated in the airfoil plane to the left and with the corresponding near circle in the near circle plane to the right. In the near circle plot to the right the chord c is set to 1. The location of the maximum thickness of this airfoil is at 0.25 chords from the leading edge. The airfoil has a maximum lift coefficient of 1.86 and a maximum lift-drag ratio of 143.92 at a Reynolds number Re = $1.6 \times 10^6$. The maximum lift coefficient is found at an attack angle of about 18° and the maximum lift-drag ratio is located at an attack angle of about 6.5°.
Figures 3B and 3C show the lift coefficient $c_l$ and the lift-drag relation. From figure 3B it is seen that the lift coefficient is not very sensitive to the inflow turbulence level but the lift-drag ratio (fig. 3C) is decreased for turbulent flow. The maximum $c_l$ and $c_l/c_d$ for fully turbulent flow are estimated to be 1.83 and 116.76.
Figures 3D-3F show the comparison of aerodynamic characteristics between clean surface and leading edge roughness at Re = $6 \times 10^6$. Fig. 3D shows lift coefficient $c_l$ vs. angle of attack $\alpha$. Fig. 3E shows $c_l$ vs. drag coefficient $c_d$. Fig. 3F shows $c_l/c_d$ vs. $c_l$. It is seen that, for the rough airfoil, the lift coefficient is slightly smaller than that of the clean airfoil, but the maximum values are almost same, i.e. the leading edge roughness results in increasing drag, but the change of the lift is very small. The maximum lift-drag ratio is decreased from 161.13 to 119.18.
Figures 3G and 3H show the lift and lift-drag coefficients $c_l$ and $c_l/c_d$ for the CQU-DTU-A15 airfoil and the NACA 63215 airfoil at Re = $1.09 \times 10^6$. From fig. 3G it is seen that the lift coefficients for the CQU-DTU-A15 airfoil increase monotonously with attack angle ranging between 0° and 20°, but the lift coefficients of the NACA 63215 airfoil start to decrease at an attack angle of 17°. Also the $c_l$ values for NACA 63215 are much smaller than for CQU-DTU-A15. The drag coefficients are similar for both airfoils, however due to the higher lift coefficient of the CQU-DTU-A15, the lift-drag ratio $c_l/c_d$ is also much bigger than that of the NACA 63215 airfoil.

**CQU-DTU-A18**

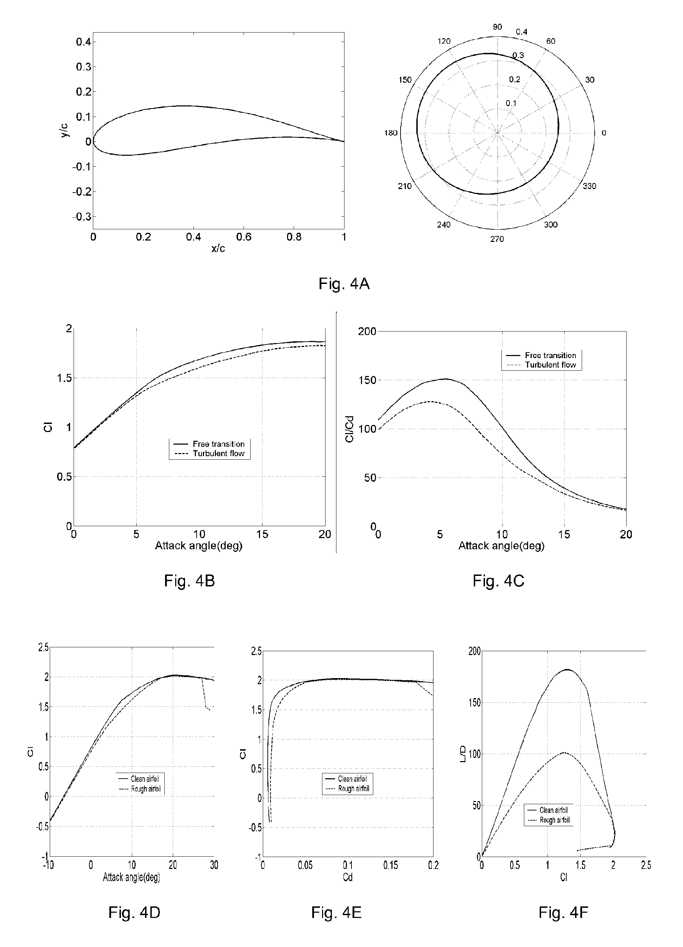

Figure 4A shows the shape of the CQU-DTU-A18 airfoil with thickness-chord ratio of 0.18. The shape of the airfoil is illustrated in the airfoil plane to the left and with the corresponding near circle in the near circle plane to the right. In the near circle plot to the right the chord c is set to 1. The location of the maximum thickness of this airfoil is at 0.25 chords from the leading edge. The airfoil has a maximum lift coefficient of 1.87 and a maximum lift-drag ratio of 150.09 at a Reynolds number Re = $1.6 \times 10^6$. The maximum lift coefficient is found at an attack angle of about 18° and the maximum lift-drag ratio is located at an attack angle of about 5.5°.
Figures 4B and 4C show the lift coefficient $c_l$ and the lift-drag relation. From fig. 4B it is seen that the lift coefficient of CQU-DTU-A18 is slightly more sensitive to inflow turbulence compared to CQU-DTU-A15. The changes in lift-drag ratio (fig. 4C) are very similar to the CQU-DTU-A15 airfoil. The maximum $c_l$ and $c_l/c_d$ for fully turbulent flow are reduced to 1.82 and 127.67.
Figures 4D-4F show the comparison of aerodynamic characteristics between clean surface and leading edge roughness at Re = $6 \times 10^6$. Fig. 4D shows lift coefficient $c_l$ vs. angle of attack$\alpha$ . Fig. 4E shows $c_l$ vs. drag coefficient $c_d$. Fig. 4F shows $c_l/c_d$ vs. $c_l$. It is seen that the lift coefficient of the rough airfoil is significantly smaller than the lift coefficient of the clean airfoil, especially at an angle of attack between 5° and 15°, i.e. the leading edge roughness results in increasing drag and decreasing lift. It should be noted that the drag coefficient at fixed transition is bigger than at free transition. The maximum lift-drag ratio is decreased from 181.41 to 101.12.

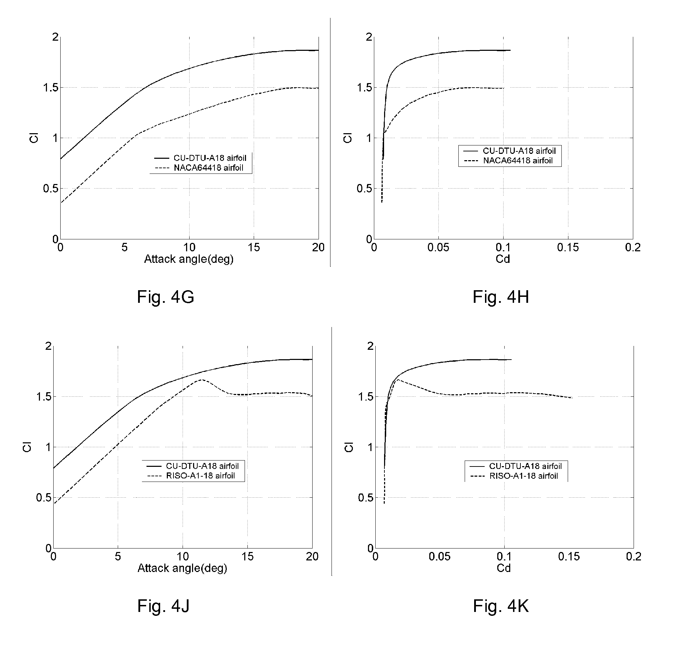

Figures 4G and 4H show the lift and lift-drag coefficients $c_l$ and $c_l/c_d$ for the CQU-DTU-A18 airfoil and the NACA 64418 airfoil at Re = $1.6 \times 10^6$. From figure 4G it is seen that the lift coefficients for both airfoils increase monotonously with attack angle ranging between 0° and 20°, but the lift coefficient of the new designed airfoil CQU-DTU-A18 is much higher than that of the NACA 64418 airfoil. The drag coefficients are similar for both airfoils, however due to the higher lift coefficient of the CQU-DTU-A18 $c_l/c_d$ is also much bigger than that of the NACA 64418 airfoil.

Figures 4J and 4K show the lift coefficient $c_l$ and lift-drag ratio $c_l/c_d$ at Re = $1.6 \times 10^6$ for the CQU-DTU-A18 airfoil and the Risø-A1-18 airfoil which have the same relative thickness. From figure 4J it is seen that CQU-DTU-A18 provides a higher lift coefficient $c_l$ for an attack angle ranging between 0° and 20°. It is worth noting that the lift coefficient $c_l$ of the Risø-A1-18 airfoil decreases for attack angle greater than 12°.

## CQU-DTU-A21

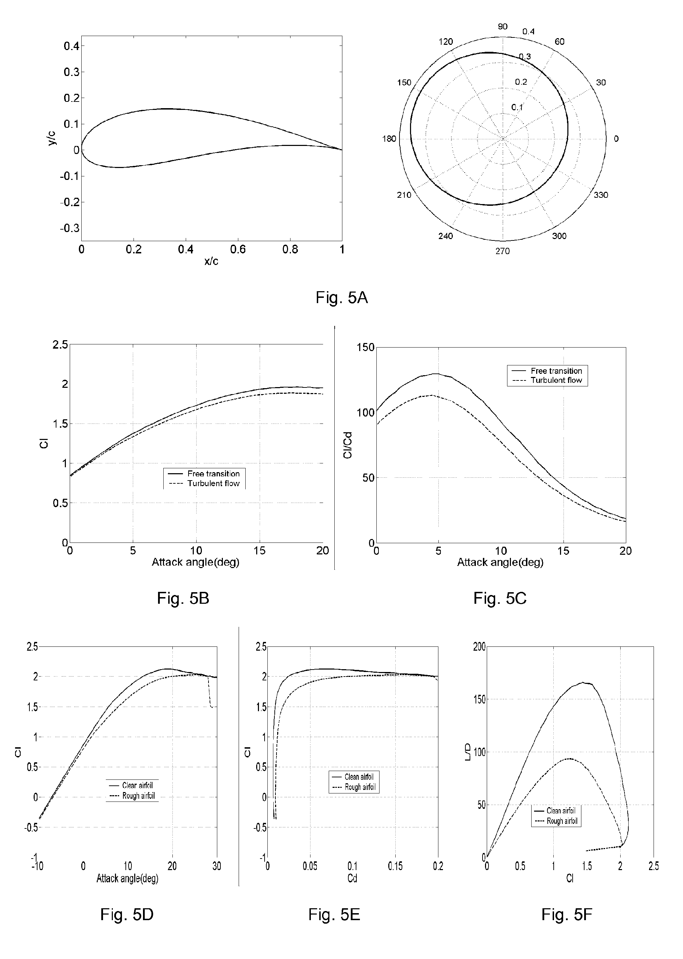

Figure 5A shows the shape of the CQU-DTU-A21 airfoil with thickness-chord ratio of 0.21. The shape of the airfoil is illustrated in the airfoil plane to the left and with the corresponding near circle in the near circle plane to the right. In the near circle plot to the right the chord c is set to 1. The location of the maximum thickness of this airfoil is at 0.23 chords. The airfoil has a maximum lift coefficient of 1.96 and a maximum lift-drag ratio of 130.10 at Re = $1.6 \times 10^6$. The maximum lift coefficient of the CQU-DTU-A21 is found at an attack angle of 18° and the maximum lift-drag ratio appears at an attack angle of 6°.

Figures 5B and 5C show the lift coefficient $c_l$ and the lift-drag relation. The maximum $c_l$ and $c_l/c_d$ for turbulent flow are reduced to 1.89 and 113.10 compared to free transitional flow.

Figures 5D-5F show the comparison of aerodynamic characteristics between clean surface and leading edge roughness at Re = $6 \times 10^6$. Fig. 5D shows the lift coefficient $c_l$ vs. angle of attack$\alpha$ . Fig. 5E shows $c_l$ vs. drag coefficient $c_d$. Fig. 5F shows $c_l/c_d$ vs. $c_l$. It is seen that the lift coefficient is decreased and the drag coefficient is increased for the rough airfoil, as compared to the clean airfoil. The maximum lift-drag ratio is decreased from 165.85 to 93.54.

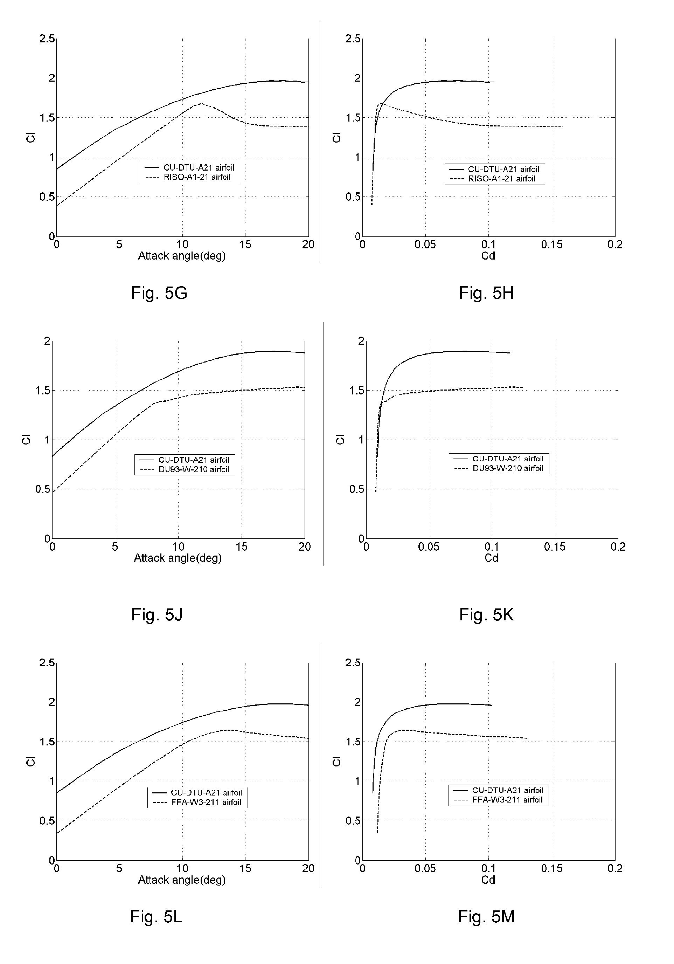

Figures 5G and 5H show the aerodynamic performance of the new CQU-DTU-A21 airfoil and the Risø-A1-21 airfoil with the same thickness-chord ratio at Re = $1.6 \times 10^6$. The Risø-A1-21 airfoil stalls at $\alpha$ = 12° where the lift suddenly decreases and the drag increases. The lift coefficient $c_l$ of the new airfoil is seen to reach a value of about 2.0. When the lift coefficient $c_l$ reaches 2, the drag coefficient $c_d$ starts to increase quickly.

Figures 5J and 5K show the aerodynamic performance of the CQU-DTU-A21 airfoil and the DU93-W-210 airfoil at Re =$1.0 \times 10^6$. From figure 5J it is obvious that the designed airfoil attains a much bigger $c_l$ during the whole attack angle range between 0° and 20°, but the slopes of the lift coefficient $c_l$ against the angle of attack $\alpha$ are similar. The drag coefficient $c_d$ for the two airfoils is very similar at angle of attack up to stall. Since a higher $c_l$ is obtained for the new airfoil, the lift-drag ratio $c_l/c_d$ of the new designed airfoil is also higher than that of the DU93-W-210 airfoil.

Figures 5L and 5M show the aerodynamic performance of the CQU-DTU-A21 airfoil and the FFA-W3-211 airfoil at Re = $1.8 \times 10^6$. Compared to the FFA-W3-211 airfoil, the lift coefficient $c_l$ of the CQU-DTU-A21 airfoil is much higher whereas the drag coefficients $c_d$ for both airfoils are similar. Thereby the lift-drag ratio $c_l/c_d$ of the designed airfoil is much higher than that of the FFA-W3-211 airfoil (fig. 5M).

**References**

[1] Eppler R, Somers D M. Low speed airfoil design and analysis. Advanced technology airfoil research-volume I, NASA CP-2045, part 1, 1979, 73-99.

[2] Eppler R, Somers D M. A computer program for the design and analysis of low-speed airfoils. NASA TM-80210, 1980.

[3] Tangler J L, Somers D M. Status of the special-purpose airfoil families. SERI/TP-217-3246, Dec. 1987.

[4] Tangler J L, Somers D M. NREL airfoil families for HAWT's. Proc. WINDPOWER'95, Washington D.C., 1995, 117-123.

[5] Timmer W A, Van Rooij A. Summary of the Delft university wind turbine dedicated airfoils. Journal of Solar Energy Engineering, 2003, 125: 488-496.

[6] Bjork A. Coordinates and calculations for the FFA-W1-xxx, FFA-W2-xxx and FFA-w3-xxx series of airfoils for horizontal axis wind turbines. FFA TN, Stockholm, Sweden, 1990.

[7] Abbott I H, Von Doenhoff A E. Theory of wing sections. New York: Dover Publications, INC, 1959.

[8] Shen W Z, Sørensen J N. Quasi-3D Navier-Stokes model for a rotating airfoil. Journal of Computational Physics, 1999, 150:518-548.

[9] Drela M. XFOIL, an analysis and design system for low Reynolds number airfoils. In Low Reynolds Number Aerodynamics, Lecture Notes in Engineering, Springer-Verlag 1989.

[10] Marcos V H. Aerodynamic performance analysis of horizontal axis wind turbines. Renewable Energy, 1994, 4 (5): 505-518.

[11] Filippone A. Airfoil inverse design and optimization by means of viscous-inviscid techniques. Journal of wind engineering and industrial aerodynamics, 1995, 56: 123-136.

[12] Fuglsang P, Bak C. Development of the RISO wind turbine airfoils. Wined Energy, 2004, 7: 145-162.

[13] Fuglsang P, Bak C, Gaunaa M, Antoniou I. Design and verification of the RisØ-B1 airfoil family for wind turbines. Journal of Solar Energy Engineering, 2004, 126: 1002-1010.

[14] Bertagnolio F, Sørensen N, Johansen J, Fuglsang P. Wind turbine airfoil catalogue. Risø-R-1280(EN), Risø National Laboratory, Denmark, 2001.

[15] Thokala P, Martins J. Variable-complexity optimization applied to airfoil design. Engineering optimization, 2007, 39(3): 271-286.

[16] Maalawi K Y, Badr M A. A practical approach for selecting optimum wind rotors. Renewable Energy, 2003, 28: 803-822.

[17] Bertagnolio F, Sørensen N N, Rasmussen F. New insight into the flow around a wind turbine airfoil section. Journal of Solar Energy Engineering, 2003, 127: 214-222.

[18] Bak C, Fuglsang P. Modification of the NACA 63-415 leading edge for better aerodynamic performance. Journal of Solar Energy Engineering, 2002, 124: 327-334.

[19] Fuglsang P, Bak C. Wind tunnel tests of the RISØ-A1-18, RISØ-A1-21 and RISØ-A1-24 airfoils. Report RisØ-R-1112(EN), RisØ National Latoratory, Roskile, Denmark, 1999.

**Claims**

1. A method for designing an airfoil by means of an analytical airfoil profile, said method comprising the step of applying a conformal mapping to a near circle in a near circle plane, wherein the near circle is at least partly expressed by means of an analytical function, said conformal mapping transforming the near circle in the near circle plane to the airfoil profile in an airfoil plane.

2. A method according to claim 1, wherein the near circle is at least partly expressed by means of a Taylor series and/or wherein the near circle is at least partly expressed by means of a trigonometric power series and/or wherein the conformal mapping is a Joukowsky transformation.

3. A method according to any of the preceding claims, wherein the near circle is at least partly expressed by means of a power series of sine and (1-cos) functions.

4. A method according to any of the preceding claims, further comprising the step of expressing the near circle in the near circle plane by means of polar coordinates (r, θ).

5. A method according to any of the preceding claims, further comprising the step of expressing the near circle in the near circle plane as $q \exp(\varphi(\theta) + i\theta)$, where θ is an angular variable, $\varphi(\theta)$ is a function of θ and $q$ is a numerical constant, preferably $q = c/4$, where $c$ is the chord of the airfoil.

6. A method according to any of the preceding claims, wherein the conformal mapping maps a near circle z'from the near circle plane to an airfoil profile $z$ in the airfoil plane by means of the relation $z = z' + \dfrac{q^2}{z'}$, where $q$ is a numerical constant, preferably $q = c/4$, where c is the chord of the airfoil.

7. A method according to any of claims 4 to 6, wherein the complex coordinates of the airfoil profile $z$ are defined as $z = x + iy$, where $x$ is the chord-wise coordinate of the airfoil, $y$ is the coordinate of the airfoil perpendicular to the chord and where $(x, y)$ expressed in polar coordinates becomes $x = (r + q^2 / r)\cos\theta$ and $y = (r - q^2 / r)\sin\theta$ due to

the conformal mapping.

8. A method according to any of the preceding claims, wherein the real part of the near circle is at least partly expressed as $\sum_{k=1}^{n} a_k \left(1 - \cos\theta\right)^k + b_k \sin^k \theta$ , where $n$ and $k$ are integers and $a_1, b_1, a_2, b_2...a_k, b_k$ are coefficients determining the shape of the airfoil.

9. A method according to any of the preceding claims, further comprising the step of expressing the near circle in the near circle plane as $q\exp(\varphi(\theta) + i\theta)$, where $\theta$ is an angular variable, $\varphi(\theta) = \sum_{k=1}^{n} a_k \left(1 - \cos\theta\right)^k + b_k \sin^k \theta$ and $q$ is a numerical constant, preferably $q = c/4$, where c is the chord of the airfoil and wherein n is at least 1, 2, 3, 4, 5, 6, 7, 8, 9, such as at least 10.

10. A method according to any of the preceding claims, wherein the real part of the near circle is at least partly expressed as
$a_1(1 - \cos\theta) + b_1 \sin\theta + a_2(1 - \cos\theta)^2 + b_2 \sin^2\theta + a_3(1 - \cos\theta)^3 + b_3 \sin^3\theta$, where the coefficients $a_1, b_1, a_2, b_2, a_3$ and $b_3$ determine the shape of the airfoil.

11. Airfoil designed and/or manufactured according to claim 10, wherein $a_1 = 0.0815$, $b_1 = 0.1$, $a_2 = 0.0002$, $b_2 = 0.0275$, $a_3 = 0.0089$ and $b_3 = 0.0001$.

12. A method for optimizing the design of an airfoil by means of modifying the corresponding airfoil profile, said method comprising the steps of:

    a) providing an analytical expression of the airfoil profile by means of any of the methods according to any of the claims 8 to 10,
    b) simulating / calculating / estimating / determining the aerodynamic performance of the airfoil,
    c) varying the coefficients $a_1, b_1, a_2, b_2...a_k, b_k$ in the expression of the airfoil profile, and
    d) maximizing the energy capture of the airfoil by repeating steps b) and c).

13. A method according to claim 12, further comprising the step(s) of defining a thickness to chord ratio of the airfoil and/or applying a constraint on the location of the maximum thickness of the airfoil and/or applying a constraint on the attack angle $\alpha$.

14. A method according to any of claims 12 to 13, wherein the energy capture is maximized by means of maximizing the lift-drag ratio of the airfoil.

15. A rotor blade for a wind turbine, wherein the airfoil of the rotor blade is at least partly designed according to any of the claims 1 to 14.

Fig. 1A

Fig. 1B

Fig. 1C

Fig. 1D

Fig. 2A

Fig. 2B

Fig. 3A

Fig. 3B

Fig. 3C

Fig. 3D

Fig. 3E

Fig. 3F

Fig. 3G

Fig. 3H

Fig. 4A

Fig. 4B

Fig. 4C

Fig. 4D

Fig. 4E

Fig. 4F

Fig. 4G

Fig. 4H

Fig. 4J

Fig. 4K

Fig. 5A

Fig. 5B

Fig. 5C

Fig. 5D

Fig. 5E

Fig. 5F

Fig. 5G

Fig. 5H

Fig. 5J

Fig. 5K

Fig. 5L

Fig. 5M

Europäisches
Patentamt

European
Patent Office

Office européen
des brevets

# EUROPEAN SEARCH REPORT

Application Number

EP 09 16 1960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Kapitel 6: Schaufel-/Profilgestaltung ED - Hubert Grieb" VERDICHTER FÜR TURBO-FLUGTRIEBWERKE, SPRINGER BERLIN HEIDELBERG, 24 January 2009 (2009-01-24), pages 339-387, XP009127333 ISBN: 978-3-540-34373-8 * page 345 - page 352; figures 6.1.3.1a-d * | 1-15 | INV. F03D1/06 F03D11/00 |
| X | APP/HÖLLIG: "Mathematik-Online-Lexikon / Beispiel: Joukowski-Abbildung" INTERNET CITATION, [Online] 25 January 2006 (2006-01-25), XP007910923 Retrieved from the Internet: URL:http://mo.mathematik.uni-stuttgart.de/ inhalt/beispiel/beispiel776/> [retrieved on 2009-12-16] * the whole document * | 1,2,12, 15 | |
| A | EP 1 152 148 A (ENRON WIND ENERGY SYSTEMS CO [US] GEN ELECTRIC [US]) 7 November 2001 (2001-11-07) * the whole document * | 1-15 | TECHNICAL FIELDS SEARCHED (IPC) F03D |
| A | GB 2 265 672 A (ADVANCED WIND TURBINES INC [US]) 6 October 1993 (1993-10-06) * the whole document * | 1-15 | |
| A | GB 2 085 976 A (UNITED TECHNOLOGIES CORP) 6 May 1982 (1982-05-06) * the whole document * | 1-15 | |
| A | EP 0 675 285 A (MIDWEST RESEARCH INST [US]) 4 October 1995 (1995-10-04) * the whole document * | 1-15 | |

The present search report has been drawn up for all claims

| Place of search | Date of completion of the search | Examiner |
|---|---|---|
| Munich | 17 December 2009 | Avramidis, Pavlos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 1960

This annex lists the patent family members relating to the patent documents cited in  the above-mentioned European search report.
The members are as contained in the European Patent Office EDP file on
The European Patent Office is in no way liable for these particulars which are merely given for the purpose of information.

17-12-2009

| Patent document cited in search report | | Publication date | Patent family member(s) | | Publication date |
|---|---|---|---|---|---|
| EP 1152148 | A | 07-11-2001 | AT | 286569 T | 15-01-2005 |
| | | | AU | 6108101 A | 12-11-2001 |
| | | | CN | 1441876 A | 10-09-2003 |
| | | | DE | 60108195 D1 | 10-02-2005 |
| | | | DE | 60108195 T2 | 11-05-2006 |
| | | | DK | 1152148 T3 | 17-05-2005 |
| | | | ES | 2237509 T3 | 01-08-2005 |
| | | | WO | 0183983 A1 | 08-11-2001 |
| | | | US | 6503058 B1 | 07-01-2003 |
| GB 2265672 | A | 06-10-1993 | IL | 105107 A | 18-06-1996 |
| | | | US | 5474425 A | 12-12-1995 |
| GB 2085976 | A | 06-05-1982 | AU | 547396 B2 | 17-10-1985 |
| | | | AU | 7673581 A | 29-04-1982 |
| | | | BE | 890884 A1 | 15-02-1982 |
| | | | CA | 1166968 A1 | 08-05-1984 |
| | | | DE | 3141948 A1 | 15-04-1982 |
| | | | FR | 2492885 A1 | 30-04-1982 |
| | | | IL | 63947 A | 31-08-1984 |
| | | | IT | 1139555 B | 24-09-1986 |
| | | | JP | 1582483 C | 11-10-1990 |
| | | | JP | 2005882 B | 06-02-1990 |
| | | | JP | 57105503 A | 01-07-1982 |
| | | | US | 4431376 A | 14-02-1984 |
| EP 0675285 | A | 04-10-1995 | AT | 187803 T | 15-01-2000 |
| | | | DE | 69513871 D1 | 20-01-2000 |
| | | | DE | 69513871 T2 | 20-07-2000 |
| | | | DK | 675285 T3 | 29-05-2000 |
| | | | ES | 2141856 T3 | 01-04-2000 |
| | | | US | 5562420 A | 08-10-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Eppler R ; Somers D M.** Low speed airfoil design and analysis. Advanced technology airfoil research-volume I. *NASA CP-2045,* 1979, 73-99
- **Eppler R ; Somers D M.** A computer program for the design and analysis of low-speed airfoils. *NASA TM-80210,* 1980
- **Tangler J L ; Somers D M.** Status of the special-purpose airfoil families. *SERI/TP-217-3246,* December 1987
- **Tangler J L ; Somers D M.** NREL airfoil families for HAWT's. *Proc. WINDPOWER'95,* 1995, 117-123
- **Timmer W A ; Van Rooij A.** Summary of the Delft university wind turbine dedicated airfoils. *Journal of Solar Energy Engineering,* 2003, vol. 125, 488-496
- Coordinates and calculations for the FFA-W1-xxx, FFA-W2-xxx and FFA-w3-xxx series of airfoils for horizontal axis wind turbines. **Bjork A.** FFA TN. Stockholm, 1990
- **Abbott I H ; Von Doenhoff A E.** Theory of wing sections. Dover Publications, INC, 1959
- **Shen W Z ; Sørensen J N.** Quasi-3D Navier-Stokes model for a rotating airfoil. *Journal of Computational Physics,* 1999, vol. 150, 518-548
- an analysis and design system for low Reynolds number airfoils. **Drela M. XFOIL.** Low Reynolds Number Aerodynamics. Springer-Verlag, 1989
- **Marcos V H.** Aerodynamic performance analysis of horizontal axis wind turbines. *Renewable Energy,* 1994, vol. 4 (5), 505-518

- **Filippone A.** Airfoil inverse design and optimization by means of viscous-inviscid techniques. *Journal of wind engineering and industrial aerodynamics,* 1995, vol. 56, 123-136
- **Fuglsang P ; Bak C.** Development of the RISO wind turbine airfoils. *Wined Energy,* 2004, vol. 7, 145-162
- **Fuglsang P ; Bak C ; Gaunaa M ; Antoniou I.** Design and verification of the RisØ-B1 airfoil family for wind turbines. *Journal of Solar Energy Engineering,* 2004, vol. 126, 1002-1010
- **Bertagnolio F ; Sørensen N ; Johansen J ; Fuglsang P.** Wind turbine airfoil catalogue. *Risø-R-1280(EN), Risø National Laboratory,* 2001
- **Thokala P ; Martins J.** Variable-complexity optimization applied to airfoil design. *Engineering optimization,* 2007, vol. 39 (3), 271-286
- **Maalawi K Y ; Badr M A.** A practical approach for selecting optimum wind rotors. *Renewable Energy,* 2003, vol. 28, 803-822
- **Bertagnolio F ; Sørensen N N ; Rasmussen F.** New insight into the flow around a wind turbine airfoil section. *Journal of Solar Energy Engineering,* 2003, vol. 127, 214-222
- **Bak C ; Fuglsang P.** Modification of the NACA 63-415 leading edge for better aerodynamic performance. *Journal of Solar Energy Engineering,* 2002, vol. 124, 327-334
- **Fuglsang P ; Bak C.** Wind tunnel tests of the RISØ-A1-18, RISØ-A1-21 and RISØ-A1-24 airfoils. *Report RisØ-R-1112(EN), RisØ National Latoratory,* 1999